# EUROPÄISCHE PATENTSCHRIFT

(11) **EP 1 273 494 B1**
(45) Veröffentlichungstag und Bekanntmachung des Hinweises auf die Patenterteilung: **22.09.2004**
(21) Anmeldenummer: 02014600.7
(22) Anmeldetag: 02.07.2002
(51) Int. Cl.: B60R 25/10, B60R 11/02

(54) **Fahrzeuginnenraum-Überwachungseinrichtung**
Vehicle interior monitoring device
Dispositif de surveillance pour l'intérieur de véhicule

(30) Priorität: 05.07.2001 DE 10132744
(43) Veröffentlichungstag der Anmeldung: 08.01.2003
(73) Patentinhaber: Hella KG Hueck & Co., 59552 Lippstadt (DE)
(72) Erfinder: Schürhoff, Konrad, 59302 Oelde (DE); Karpinsky, Jürgen, Dipl.-Ing., 59329 Wadersloh (DE)

(56) Entgegenhaltungen:
- EP-A- 0 814 003
- EP-A- 0 909 960
- DE-A- 4 417 710
- DE-A- 19 739 075
- DE-A- 19 755 614
- US-A- 4 684 164

## Beschreibung

Die Erfindung betrifft eine Fahrzeuginnenraum-Überwachungseinrichtung auf Infrarot- und/oder Ultraschallbasis, mit einem wenigstens ein Sendeelement und zumindest ein Empfangselement aufweisenden Sende-/Empfangsmodul, das mit einer Auswerteeinrichtung zur Auswertung der vom Fahrzeuginnenraum reflektierten Signale verbunden ist.

Eine derartige Überwachungseinrichtung ist aus EP 0 814 003 A1 bekannt. Sie weist ein Sende-/Empfangsmodul mit einem UltraschallSender und einem diesem zugeordneten Empfänger zum Detektieren der von der Fahrzeuginneneinrichtung und/oder den Begrenzungswänden des Fahrzeuginnenraums refelektierten Signale des Ultraschall-Senders auf. Das Sende-/Empfangsmodul ist etwa mittig am Dachhimmel hinter einer Öffnung für ein Schiebedach angeordnet und in die Dachverkleidung des Fahrzeugs integriert. Die Fahrzeuginnenraum-Überwachungseinrichtung hat den Nachteil, daß das Sende- und das Empfangselement vor allem zum Überwachen großer Fahrzeuginnenräume aus dem Dachhimmel in den Fahrzeuginnenraum vorstehen müssen, damit auch die Randbereiche des Fahrzeuginnenraums zuverlässig überwacht werden können. Das aus dem Dachhimmel in den Fahrzeuginnenraum ragende Sende-/Empfangsmodul wird jedoch von den Fahrzeuginsassen als störend empfunden. Ungünstig ist außerdem, daß nicht ohne weiteres ersichtlich ist, ob die Fahrzeuginnenraum-Überwachungseinrichtung aktiviert ist oder nicht.

Aus EP 0 909 960 A2 kennt man auch bereits eine Fahrzeuginnenraum-Überwachungseinrichtung, die mehrere Sende- und Empfangselemente aufweist, die auf beiden Seiten des Fahrzeuginnenraums an den B-Säulen angeordnet sind. Die Sende- und Empfangselemente lassen sich zwar relativ unauffällig in die B-Säulen mit Abstand zum Dachhimmel integrieren. Der Einbau einer solchen Überwachungseinrichtung in ein Fahrzeug ist jedoch noch relativ kompliziert, da an mehreren Stellen in dem Fahrzeuginnenraum Montagearbeiten durchgeführt werden müssen und auch der Verkabelungsaufwand noch relativ groß ist.

Es besteht deshalb die Aufgabe, eine Fahrzeuginnenraum-Überwachungseinrichtung der eingangs genannten Art zu schaffen, welche mit geringem Aufwand die Überwachung großer Innenräume ermöglicht, die aber dennoch in deaktiviertem Zustand für die Fahrzeuginsassen nicht störend in Erscheinung tritt.

Die Lösung dieser Aufgabe besteht darin, daß das Sende-/Empfangsmodul verstellbar mit einem Trägerteil verbunden ist und aus einer Ruhelage, in der es im wesentlichen innerhalb der Außenkontur des Trägerteils angeordnet ist, in eine Betriebslage bringbar ist, in der es mit dem Sendeelement und dem Empfangselement in Überwachungsrichtung weisend über die Außenkontur des Trägerteils übersteht.

In vorteilhafter Weise steht das Sende- und/oder Empfangselement bei aus dem Trägerteil ausgefahrenem, in Betriebslage befindlichem Sende-/Empfangsmodul in den Fahrzeuginnenraum vor, was einen entsprechend großen Überwachungsbereich ermöglicht. Dadurch kann mit nur einer einzigen, beispielsweise an zentraler Stelle in den Dachhimmel integrierten Überwachungseinrichtung der gesamte Fahrzeuginnenraum zuverlässig überwacht werden. In Ruhelage ist das Sende-/Empfangsmodul dagegen aus dem Fahrzeuginnenraum zurückgezogen, wodurch sich eine flache Überwachungseinrichtung mit kompakten Abmessungen ergibt, welche von den Fahrzeuginsassen nicht als störend empfunden wird. In vorteilhafter Weise läßt sich anhand der Stellung des Sende-/Empfangsmoduls relativ zu dem Trägerteil auch auf einfache Weise erkennen, ob die Überwachungseinrichtung aktiv oder inaktiv ist. Dadurch können Fehlalarme, die der berechtigte Benutzer des Fahrzeugs versehentlich selbst auslöst, vermieden werden.

Bei einer vorteilhaften Ausführungsform der Erfindung ist vorgesehen, daß das Sende-/Empfangsmodul eine Abdeckung aufweist, hinter welcher das (die) Sendeelement(e) und das (die) Empfangselement(e) angeordnet sind, und daß die dem Fahrzeuginnenraum zugewandte Außenseite der Abdeckung mit ihrem Randbereich in der Ruhelage im wesentlichen mit der Außenseite eines benachbart zu diesem Randbereich an die Abdeckung angrenzenden Trägerteilbereichs fluchtet. Das Sende-/Empfangsmodul schließt dann in Ruhelage mit seiner dem Fahrzeuginnenraum zugewandten Begrenzungsfläche konturgleich an die Kontur des Trägerteils an. Somit ergibt sich insgesamt an der dem Fahrzeuginnenraum zugewandten Seite der Überwachungseinrichtung eine durchgehende Begrenzungsfläche, die ein formschönes Design der Überwachungseinrichtung ermöglicht.

Bei einer zweckmäßigen Ausführungsform der Erfindung ist wenigstens ein durch die Verstellbewegung des Sende-/Empfangsmoduls betätigbares Schaltelement zum Ein- und Ausschalten des Sende/Empfangsmoduls vorgesehen, wobei das Sende-/Empfangsmodul in Ruhelage ausgeschaltet und in Betriebslage eingeschaltet ist. Das Sende-/Empfangsmodul kann dann manuell aus der Ruhelage in die Betriebslage gebracht werden, woraufhin es mit einer vorgegebenen Zeitverzögerung aktiviert wird, wobei diese Zeitverzögerung so bemessen ist, daß der Benutzer innerhalb der Zeitverzögerung aus dem Fahrzeug aussteigen kann.

Bei einer anderen, besonders vorteilhaften Ausführungsform der Erfindung ist das Sende-/Empfangsmodul mittels eines vorzugsweise elektrischen Stellantriebs aus der Ruhelage in die Betriebslage verstellbar. Der Stellantrieb kann mit dem Türschloss einer Fahrzeugtüre und/oder der Innenraumverriegelung gekoppelt sein. Das Sende-/Empfangsmodul wird dann beim Abschließen oder Verriegeln der Fahrzeugtüren mittels des Stellantriebs automatisch aus der Ruhelage in die Betriebslage gebracht, um die Überwachungseinrichtung zu aktivieren. In entsprechender Weise wird das Sende-/Empfangsmodul beim Entriegeln der Fahrzeugtüren mittels des Stellantriebs automatisch aus der Betriebslage in die Ruhelage verstellt.

Bei einer Ausführungsform der Erfindung ist das Sende-/Empfangsmodul mittels einer Schiebeführung quer zur Streckungsebene des Trägerteils verschiebbar mit diesem verbunden. Das Sende/Empfangsmodul kann dann beispielsweise an einem relativ zu dem Trägerteil verschiebbaren, ein- und ausfahrbaren Schlitten angeordnet sein.

Besonders vorteilhaft ist, wenn das Sende-/Empfangsmodul verschwenkbar mit dem Trägerteil verbunden ist und wenn die Schwenkachse vorzugsweise benachbart zu einem Randbereichs des Sende-/Empfangsmoduls angeordnet ist. Dadurch ergibt sich eine besonders einfach aufgebaute, kostengünstig herstellbare Überwachungseinrichtung mit ein- und ausklappbarem Sende /Empfangsmodul. Dabei kann die Schwenkbewegung gegebenenfalls durch an der Überwachungseinrichtung vorgesehene Anschlagelemente und/oder durch Schaltkontakte, die in den Schwenkendlagen von dem Sende-/Empfangsmodul betätigt werden, begrenzt werden.

Bei einer vorteilhaften Ausführungsform der Erfindung ist vorgesehen, daß wenigstens ein Sendeelement und/oder ein Empfangselement an einer quer zur Erstreckungsebene des Trägerteils angeordneten Stirnseite des Sende-/Empfangsmoduls angeordnet ist, vorzugsweise an der von der Schwenkachse entfernt angeordneten Stirnseite, und daß diese Stirnseite in Ruhelage des Sende/Empfangsmoduls innerhalb der Außenkontur der Fahrzeuginnenraum-Überwachungseinrichtung angeordnet ist. Das an der von der Schwenkachse entfernt angeordneten Stirnseite befindliche Sendeund/oder Empfangselement ist dann in Betriebslage mit seiner Hauptsende- bzw. Hauptempfangsrichtung unter einem günstigen Winkel zum Fahrzeuginnenraum angeordnet, wenn die Überwachungseinrichtung beispielsweise am Dachhimmel montiert ist. Zusätzlich kann gegebenenfalls wenigstens ein weiteres Sende- und/oder Empfangselement an der dem Fahrzeuginnenraum zugewandten, quer zu dieser Stirnseite verlaufenden Flachseite des Sende- und Empfangsmoduls vorgesehen sein, wodurch ein noch größerer Innenraumbereich überwacht werden kann. In Ruhelage des Sende-/Empfangsmoduls ist das an der Stirnseite befindliche Sende- und/oder Empfangselement vollständig innerhalb der Außenkontur der Fahrzeuginnenraum-Überwachungseinrichtung angeordnet und somit für die Fahrzeuginsassen nicht sichtbar. In der Betriebslage steht das an der Stirnseite befindliche Sende- und/oder Empfangselement über die Außenkontur des Trägerteils vor.

Bei einer vorteilhaften Ausführungsform der Erfindung ist vorgesehen, daß das Trägerteil Befestigungsstellen zum Verbinden mit dem Dachhimmel des Fahrzeugs aufweist, insbesondere mit dem vorderen Dachhimmelbereich, daß die Schwenkachse des Sende/Empfangsmoduls benachbart zu einem in Montagestellung der Fahrzeuginnenraum-Überwachungseinrichtung der Frontscheibe des Fahrzeugs zugewandten Randbereich des Trägerteils angeordnet ist, und daß wenigstens ein Sendeelement und/oder Empfangselement an der von der Schwenkachse entfernt angeordneten hinteren Stirnseite des Sende-/Empfangsmoduls vorgesehen ist, derart, daß es in Betriebslage des Sende-/Empfangsmoduls dem hinteren Innenraumbereich des Fahrzeugs zugewandt ist. Das an der hinteren Stirnseite des Sende-/Empfangsmoduls befindliche Sende- und/oder Empfangselement ist dann in Betriebslage des Sende-/Empfangsmoduls mit seiner Hauptsende- bzw. seiner Hauptempfangsrichtung dem hinteren Teil des Fahrzeuginnenraums zugewandt, während der vordere Bereich des Innenraums beispielsweise von an der Unterseite des Sende-/Empfangsmoduls vorgesehenen Sende- und/oder Empfangselementen überwacht werden kann.

Bei einer zweckmäßigen Ausgestaltung der Erfindung ist zum Verstellen des Sende-/Empfangsmodul eine vorzugsweise an dem Sende/Empfangsmodul angeordnete Zahnstange vorgesehen, die mit einem Antriebsritzel eines vorzugsweise an dem Trägerteil angeordneten Stellantriebs in Eingriff steht. Der Stellantrieb kann dann als Getriebemotor ausgebildet sein, wodurch sich insgesamt ein kompakter Aufbau ergibt.

Vorteilhaft ist, wenn die Zahnstange gegen die Rückstellkraft eines Federelements radial zur Achse des Antriebsritzels auslenkbar mit einem die Zahnstange vorzugsweise rahmenförmig umgrenzenden Halteteil verbunden ist. In vorteilhafter Weise können durch das Federelement Montage- und Bauteiltoleranzen der einzelnen Teile der Überwachungseinrichtung ausgeglichen werden, was einerseits eine hohe Betriebssicherheit des Stellantriebs sowie der für die Bewegungsübertragung benötigten Teile ermöglicht und andererseits aber auch eine kostengünstige Fertigung der Überwachungseinrichtung in Serienproduktion erlaubt. Das Halteteil ist vozugsweise als Halterahmen oder Halteportal ausgebildet, das die Zahnstange in der Ebene oder Fläche, in der die Verzahnung der Zahnstange angeordnet ist, umgrenzt, so daß diese seitlich fixiert ist. Als Federelement wird eine Blattfeder bevorzugt, die vorzugsweise mit ihrer Längserstreckung etwa parallel zur Längserstreckung der Zahnstange angeordnet ist. Mit ihren Endbereichen kann die Blattfeder gegen die Zahnstange und mit ihrem mittleren Bereich gegen den Halterahmen abgestützt sein.

Bei einer besonders vorteilhaften Ausführungsform der Erfindung ist vorgesehen, daß an dem Trägerteil zusätzlich zu dem Sende/Empfangsmodul wenigstens eine Innenleuchte und/oder Leseleuchte angeordnet ist, und daß die Lichtscheibe(n) dieser Innenleuchte und/oder Leseleuchte in der Ruhelage des Sende-/Empfangsmoduls vorzugsweise etwa mit der Abdeckung des Sende-/Empfangsmoduls fluchtet. Dadurch ergibt sich eine kompakt aufgebaute Baugruppe, die zusätzlich zu der Innenraum-Überwachung auch noch mindestens eine Beleuchtungsfunktion ermöglicht. In der Ruhelage des Sende/Empfangsmoduls fluchtet dessen Abdeckung vorzugsweise mit der (den) Lichtscheibe(n) der Leuchte(n), so daß sich insgesamt eine durchgängige Außenfläche der Baugruppe ergibt, die ein optisch ansprechendes Design ermöglicht.

Vorteilhaft ist, wenn beidseits des Sende-/Empfangsmoduls Innenleuchten und/oder Leseleuchten angeordnet sind und wenn die durch das Sende-/Empfangsmodul und diese Leuchten gebildete Anordnung vorzugsweise etwa spiegelsymetrisch bezüglich einer rechtwinklig zur Erstreckungsebene des Trägerteils angeordneten Längsmittelebene ausgebildet ist. Somit ergibt sich ein kompakt aufgebauter Dachknoten, der in Gebrauchstellung vorzugsweise in einem zentralen Bereich des Dachhimmels angeordnet ist, beispielsweise in der vertikalen Längsmittelebene des Fahrzeugs vor und/oder hinter einer im Dachhimmel vorgesehenen Öffnung für ein Schiebedach. Bei der Herstellung des Fahrzeugs ermöglicht dieser Dachknoten eine einfache und kostengünstige Montage mit geringem Verkabelungsaufwand.

Nachfolgend ist ein Ausführungsbeispiel der Erfindung anhand der Zeichnungen näher erläutert. Es zeigen:
- Fig. 1: eine Aufsicht auf die in Gebrauchsstellung dem Fahrzeuginnenraum zugewandte Seite einer Innenraum-Überwachungseinrichtung sowie mehrere Leuchten für unterschiedliche Beleuchtungsfunktionen aufweisenden Baugruppe, wobei verdeckte Bauteil strichliniert markiert sind,

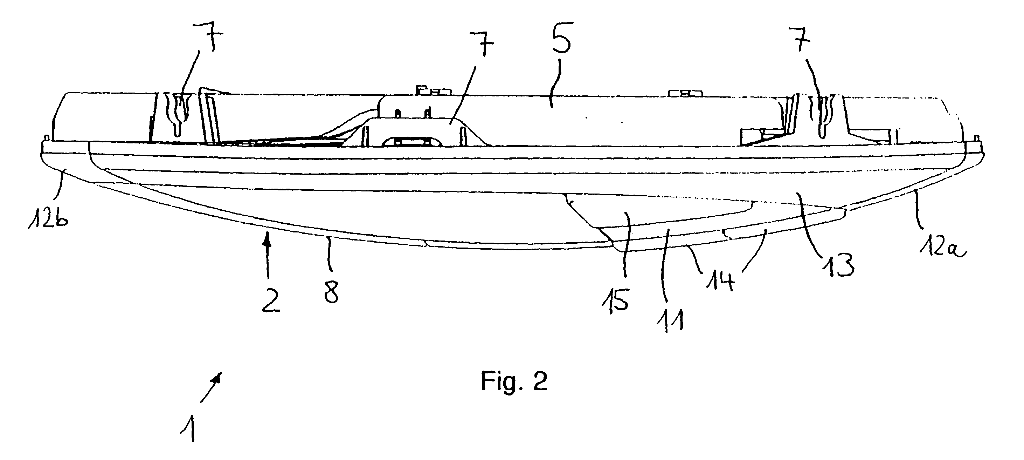

- Fig. 2: eine Seitenansicht der in Fig. 1 gezeigten Baugruppe,
- Fig. 3: einen Querschnitt durch die in Fig. 1 gezeigte Baugruppe entlang der in Fig. 1 mit III bezeichneten Ebene und
- Fig. 4: einen Querschnitt durch die in Fig. 1 gezeigte Baugruppe entlang der in Fig. 1 mit IV bezeichneten Mittelebene, wobei sich das Sende-/Empfangsmodul in Ruhelage befindet und wobei strichliniert zusätzlich die Betriebslage des Sende-/Empfangsmoduls eingezeichnet ist.

Eine im Ganzen mit 1 bezeichnete Fahrzeuginnenraum-Überwachungseinrichtung weist ein in der Zeichnung nur schematisch dargestelltes Sende-/Empfangsmodul 2 auf, das zwei Ultraschall-Sendeelemente 3a, 3b zum Aussenden von Ultraschall-Signalen in den Innenraum eines Fahrzeugs und ein Empfangselement 4 zum Empfangen der von dem Fahrzeuginnenraum bzw. dessen Begrenzungswänden reflektierten Signale hat. Das Sende-/Empfangsmodul 2 ist mit einer in der Zeichnung nicht näher dargestellten Auswerteeinrichtung verbunden, die einen Mikrocontroller aufweist, der auf einem Leiterbahnen aufweisenden flexiblen Träger angeordnet ist. Dieser dient in an sich bekannter Weise zur Ansteuerung der Sendeelemente 3a, 3b und des Empfangselements 4 mit den erforderlichen Ultraschallimpulsen sowie zur Auswertung der von dem Empfangselement 4 erfaßten Signale entsprechend der von dem Innenraum reflektierten Ultraschallwellen.

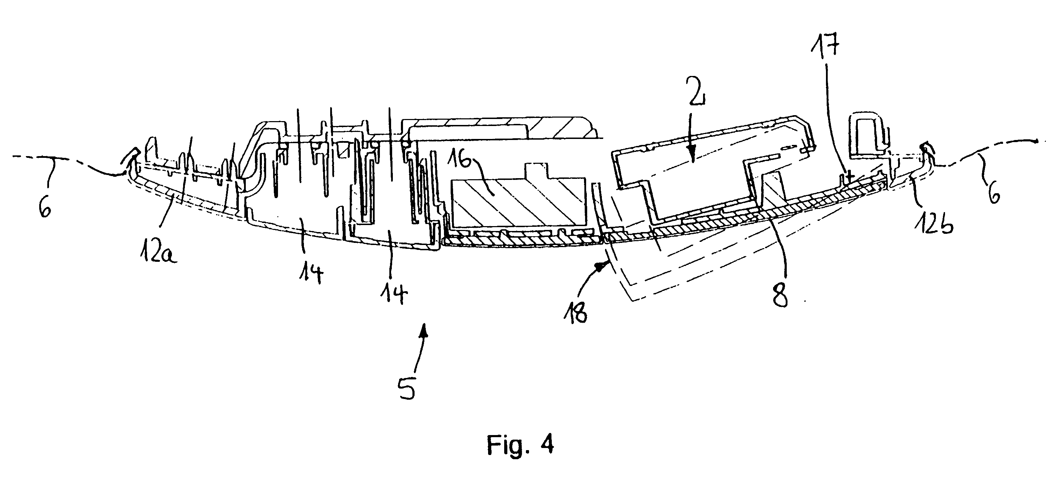

Wie in Fig. 4 besonders gut erkennbar ist, ist das Sende/Empfangsmodul 2 zwischen einer Ruhelage und einer Betriebslage hin- und herverschwenkbar mit einem im Ganzen mit 5 bezeichneten Trägerteil verbunden. In Betriebslage steht das Sende-/Empfangsmodul mit den beiden Ultraschall-Sendeelementen 3a, 3b und dem Empfangselement 4 über die Außenkontur des Trägerteils 5 in den zu überwachenden Fahrzeuginnenraum vor, was einen großen Überwachungsbereich ermöglicht. In der Ruhelage ist das Sende/Empfangsmodul 2 vollständig innerhalb der Außenkontur des Trägerteils 5 angeordnet, so daß die Überwachungseinrichtung 1 dann nur eine vergleichsweise geringe Bauhöhe aufweist.

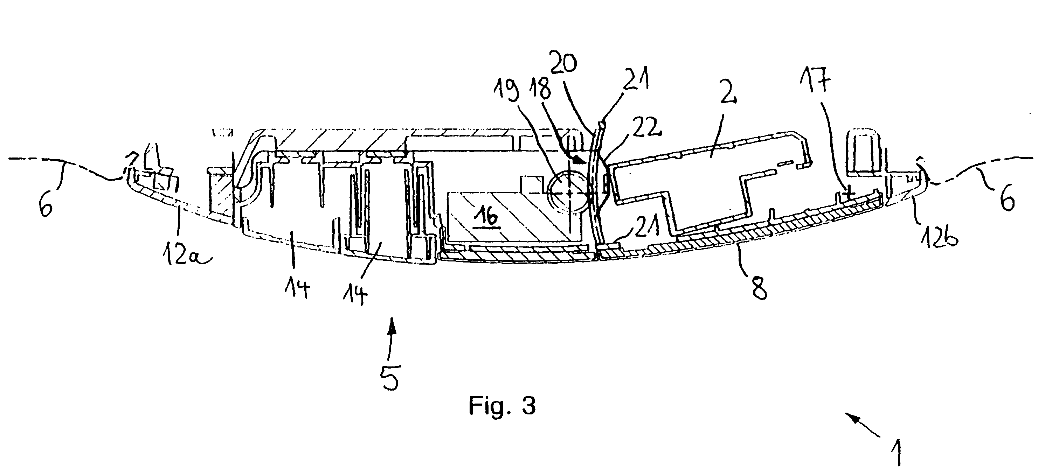

In Fig. 3 und 4 ist erkennbar, daß das Trägerteil 5 in Montagestellung bereichsweise in eine im Dachhimmel 6 des Fahrzeugs vorgesehene Öffnung eingesetzt ist. An seinem Außenrand weist das Trägerteil 5 Befestigungsstellen 7 zum Verbinden mit dem die Öffnung umgrenzenden Randbereich des Dachhimmels 6 auf.

Das Sende-/Empfangsmodul weist an seiner dem Fahrzeuginnenraum zugewandten Unterseite eine blickdichte, für die UltraschallSignale durchlässige Abdeckung 8 auf, hinter der das Sendeelement 3a und das Empfangselement 4 angeordnet sind.

In das Trägerteil 5 sind zusätzlich zu dem Sende-/Empfangsmodul 2 vier Innenleuchten 9, 10 und zwei Leseleuchten 11 integriert, so daß sich insgesamt ein kompaktes Funktionsmodul ergibt, daß seinem Benutzer mehrere unterschiedliche Funktionen zur Verfügung stellt. Die Innenleuchten 9 sind zum hellen Beleuchten des Fahrzeuginnenraums vorgesehen. Die Innenleuchten 10 erzeugen eine kleinere Leuchtdichte als die Innenleuchten 9 und dienen zum ambienten Beleuchten des Fahrzeuginnenraums. Die Innenleuchten 10 sind bei Nachtbetrieb des Fahrzeugs ständig eingeschaltet.

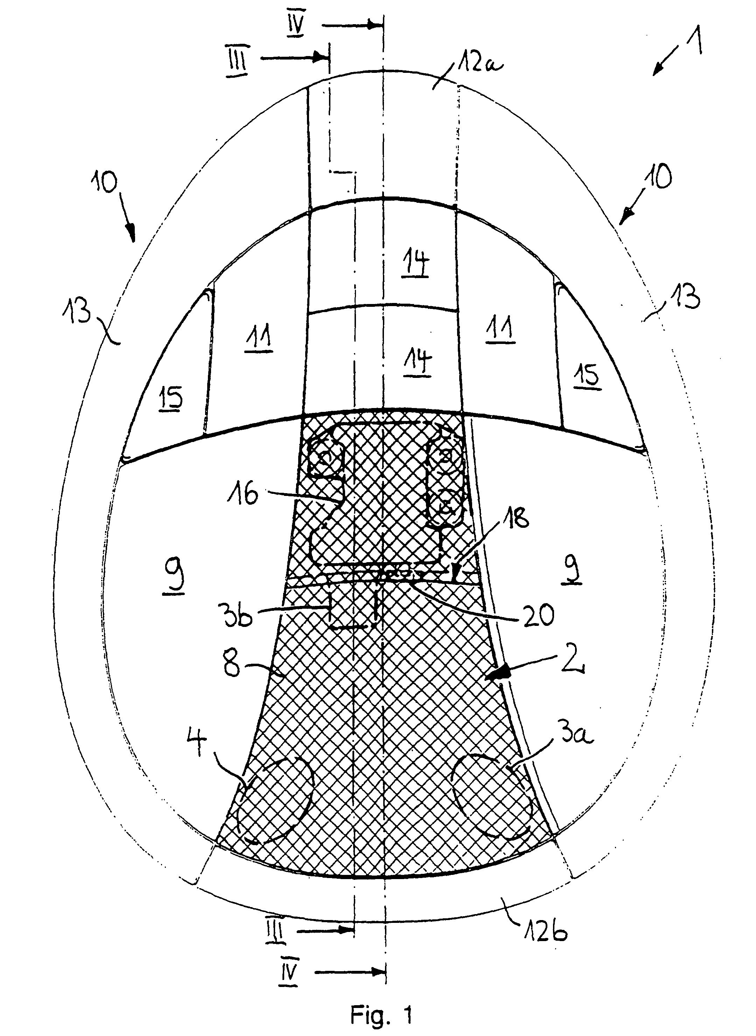

In Fig. 1 ist erkennbar, daß die Überwachungseinrichtung etwa spiegelsymetrisch bezüglich einer rechtwinklig zur Erstreckungsebene des Trägerteils 5 angeordneten, in Fig. 1 mit IV bezeichneten Längsmittelebene ausgebildet ist und daß beidseits dieser Längsmittelebene jeweils eine Innenleuchte 9, eine Innenleuchte 10 und eine Leseleuchte 11 angeordnet sind. Die Innenleuchten 9 weisen jeweils wenigstens ein Leuchtmittel auf, das durch eine Lichtscheibe abgedeckt ist, die seitlich neben dem Sende/Empfangsmodul 2 angeordnet ist.

Die zur ambieneten Beleuchtung des Innenraums vorgesehenen Innenleuchten 10 haben Leuchtdioden als Leuchtmittel, die hinter Blenden 12a, 12b des Trägerteils 5 angeordnet sind. Das von den Lichtdioden erzeugte Licht wird über Lichtleiter 13 zum äußeren Rand des Trägerteils 5 geleitet und dort aus den Lichtleitern 13 ausgekoppelt. Das Trägerteil 5 weist außerdem Taster 14 zum Einstellen der von den Innenleuchten 10 erzeugten Leuchtdichte und Schalter 15 zum getrennten Ein-/Ausschalten der Leseleuchten 11 auf. Bei in Ruhestellung befindlichem Sende-/Empfangsmodul 2 fluchtet die Abdeckung 8 des Sende-/Empfangsmoduls 2 mit den Lichtscheiben der Innenleuchten 9, den Lichtscheiben der Leseleuchten 11, der Blende 12b und den Tastern 14.

Das Sende-/Empfangsmodul 2 ist mittels eines Stellantriebs 16 aus der Ruhelage in die Betriebslage verschwenkbar. Der Stellantrieb 16 ist als Getriebemotor ausgebildet, der einen Elektromotor mit einem daran angeordneten Zahnradgetriebe umfaßt. In Fig. 1 ist erkennbar, daß der Stellantrieb 16 etwa mittig an dem Trägerteil 5 angeordnet ist.

Der Stellantrieb 16 ist mit einer in der Zeichnung nicht näher dargestellten Steuerung verbunden, die an einer Schließanlage für die Fahrzeugtüren angeschlossen ist. Beim Abschließen der Fahrzeugtüren wird das Sende-/Empfangsmodul 2 in die Betriebslage und beim Entriegeln der Fahrzeugtüren in die Ruhelage verschwenkt.

In Fig. 3 und 4 ist erkennbar, daß die Schwenkachse 17, um welche das Sende-/Empfangsmodul 2 relativ zu dem Trägerteil 5 verschwenkbar ist, benachbart zu dem vorderen, in Montagestellung der Frontscheibe des Fahrzeugs zugewandten Randbereich des Sende /Empfangsmoduls 2 angeordnet ist. Die von der Schwenkachse 17 entfernt gelegene hintere Stirnseite 18 des Sende-/Empfangsmoduls 2 ist in Ruhestellung des Sende-/Empfangsmoduls 2 innerhalb und in Betriebsstellung außerhalb der Außenkontur des Trägerteils 5 angeordnet. An der Stirnseite 18 des Sende-/Empfangsmoduls 2 ist das Sendeelement 3b derart angeordnet, daß es in Betriebsstellung mit seiner Hauptabstrahlrichtung quer zur Erstreckungsebene der Stirnseite 18 in den hinteren Teil des Fahrzeuginnenraums weist. Das an der Unterseite des Sende-/Empfangsmoduls 2 angeordnete Sendeelement 3a ist im wesentlichen zur Überwachung des vorderen Innenraumbereichs vorgesehen.

In Fig. 3 ist erkennbar, daß der an dem Trägerteil 5 angeordnete Stellantrieb 16 ein Antriebsritzel 19 aufweist, das mit einer Zahnstange 20 kämmt, die an dem Sende-/Empfangsmodul 2 mit Abstand von dessen Schwenkachse 17 angeordnet ist. In Fig. 3 ist erkennbar, daß die Zahnstange 20 und die Schwenkachse 17 an gegenüberliegenden Seiten des Sende-/Empfangsmoduls 2 angeordnet sind und daß die Zahnstange 20 auf einem Kreisbogen angeordnet ist, dessen Kreismittelpunkt etwa auf der Schwenkachse 17 liegt.

Die Zahnstange 20 ist seitlich von einem rahmenförmigen Halteteil 21 umgrenzt, an dem sie gegen die Rückstellkraft eines Federelements 22 radial zur Achse des Antriebsritzels 19 auslenkbar gehalten ist. Das Federelement 22 ist als etwa V-förmige Blattfeder ausgebildet, die mit den freien Endbereichen ihrer Schenkelteile an in Ersreckungsrichtung der Zahnstange 20 voneinander beabstandeten Stellen an der dem Antriebsritzel 19 abgwandten Rückseite der Zahnstange 20 angreift. An einen zwischen diesen Endbereichen befindlichen mittleren Teilbereich, er von der Zahnstange 20 beabstandet ist, ist das Federelement 22 gegen das Halteteil 21 abgestützt. Durch das Federelement 22 werden in der Praxis kaum vermeidbare Montage- und Bauteiltoleranzen ausgeglichen.

Die Fahrzeuginnenraum-Überwachungseinrichtung 1 weist also ein Sende-/Empfangsmodul 2 mit wenigstens einem Sendeelement 3a, 3b und zumindest einem Empfangselement 4 auf. Zur Auswertung der vom Fahrzeuginnenraum reflektierten Signalen ist das Sende/Empfangsmodul 2 mit einer Auswerteeinrichtung verbunden. Das Sende-/Empfangsmodul 2 ist verstellbar mit einem Trägerteil 5 verbunden und aus einer Ruhelage, in der es im wesentlichen innerhalb der Außenkontur des Trägerteils 5 angeordnet ist, in eine Betriebslage bringbar, in der es mit dem wenigstens einen Sendeelement 3a, 3b und dem zumindest einen Empfangselement (4) in Überwachungsrichtung weisend über die Außenkontur des Trägerteils 5 übersteht.

## Patentansprüche

1. Fahrzeuginnenraum-Überwachungseinrichtung (1) auf Infrarotund/oder Ultraschallbasis, mit einem wenigstens ein Sendeelement (3a, 3b) und zumindest ein Empfangselement (4) aufweisenden Sende-/Empfangsmodul (2), das mit einer Auswerteeinrichtung zur Auswertung der vom Fahrzeuginnenraum reflektierten Signale verbunden ist, **dadurch gekennzeichnet, daß** das Sende-/Empfangsmodul (2) verstellbar mit einem Trägerteil (5) verbunden ist und aus einer Ruhelage, in der es im wesentlichen innerhalb der Außenkontur des Trägerteils (5) angeordnet ist, in eine Betriebslage bringbar ist, in der es mit dem Sendeelement (3a, 3b) und dem Empfangselement (4) in Überwachungsrichtung weisend über die Außenkontur des Trägerteils (5) übersteht.

2. Fahrzeuginnenraum-Überwachungseinrichtung (1) nach Anspruch 1, **dadurch gekennzeichnet, daß** das Sende-/Empfangsmodul eine Abdeckung (8) aufweist, hinter welcher alle Sendeelemente (3a, 3b) und alle Empfangselemente (4) angeordnet sind, und daß die dem Fahrzeuginnenraum zugewandte Außenseite der Abdeckung (8) mit ihrem Randbereich in der Ruhelage im wesentlichen mit der Außenseite eines benachbart zu diesem Randbereich an die Abdeckung (8) angrenzenden Trägerteilbereichs fluchtet.

3. Fahrzeuginnenraum-Überwachungseinrichtung (1) nach Anspruch 1 oder 2, **dadurch gekennzeichnet, daß** wenigstens ein durch die Verstellbewegung des Sende-/Empfangsmoduls (2) betätigbares Schaltelement zum Ein- und Ausschalten des Sende/Empfangsmoduls (2) vorgesehen ist, und daß das Sende/Empfangsmodul (2) in Ruhelage ausgeschaltet und in Betriebslage eingeschaltet ist.

4. Fahrzeuginnenraum-Überwachungseinrichtung (1) nach Anspruch 1 bis 3, **dadurch gekennzeichnet, daß** das Sende-/Empfangsmodul (2) mittels eines elektrischen Stellantriebs (16) aus der Ruhelage in die Betriebslage verstellbar ist.

5. Fahrzeuginnenraum-Überwachungseinrichtung (1) nach einem der Ansprüche 1 bis 4, **dadurch gekennzeichnet, daß** das Sende/Empfangsmodul (2) mittels einer Schiebeführung quer zur Erstreckungsebene des Trägerteils (5) verschiebbar mit diesem verbunden ist.

6. Fahrzeuginnenraum-Überwachungseinrichtung (1) nach einem der Ansprüche 1 bis 5, **dadurch gekennzeichnet, daß** das Sende/Empfangsmodul (2) verschwenkbar mit dem Trägerteil (5) verbunden ist und daß die Schwenkachse (17) vorzugsweise benachbart zu einem Randbereich des Sende-/Empfangsmoduls (2) angeordnet ist.

7. Fahrzeuginnenraum-Überwachungseinrichtung (1) nach einem der Ansprüche 1 bis 6, **dadurch gekennzeichnet, daß** wenigstens ein Sendeelement (3a, 3b) und/oder ein Empfangselement (4) an einer quer zur Erstreckungsebene des Trägerteils (5) angeordneten Stirnseite (18) des Sende-/Empfangsmoduls (2) angeordnet ist, vorzugsweise an der von der Schwenkachse (17) entfernt angeordneten Stirnseite (18), und daß diese Stirnseite (18) in Ruhelage des Sende-/Empfangsmoduls (2) innerhalb der Außenkontur der Fahrzeuginnenraum-Überwachungseinrichtung (1) angeordnet ist.

8. Fahrzeuginnenraum-Überwachungseinrichtung (1) nach einem der Ansprüche 1 bis 7, **dadurch gekennzeichnet, daß** das Trägerteil (5) Befestigungsstellen (7) zum Verbinden mit dem Dachhimmel (6) des Fahrzeugs aufweist, insbesondere mit dem vorderen Dachhimmelbereich, daß die Schwenkachse (17) des Sende-/Empfangsmoduls (2) benachbart zu einem in _{M}ontagestellung der Fahrzeuginnenraum-Überwachungseinrichtung (1) der Frontscheibe des Fahrzeugs zugewandten Randbereich des Trägerteils (5) angeordnet ist, und daß wenigstens ein Sendeelement (3a, 3b) und/oder Empfangselement (4) an der von der Schwenkachse (17) entfernt angeordneten hinteren Stirnseite des Sende-/Empfangsmoduls (2) vorgesehen ist, derart, daß es in Betriebslage des Sende-/Empfangsmoduls (2) dem hinteren Innenraumbereich des Fahrzeugs zugewandt ist.

9. Fahrzeuginnenraum-Überwachungseinrichtung (1) nach einem der Ansprüche 1 bis 8, **dadurch gekennzeichnet, daß** zum Verstellen des Sende-/Empfangsmoduls (2) eine vorzugsweise an dem Sende /Empfangsmodul (2) angeordnete Zahnstange (20) vorgesehen ist, die mit einem Antriebsritzel (19) des vorzugsweise an dem Trägerteil (5) angeordneten Stellantriebs (16) in Eingriff steht.

10. Fahrzeuginnenraum-Überwachungseinrichtung (1) nach einem der Ansprüche 1 bis 9, **dadurch gekennzeichnet, daß** die Zahnstange (20) gegen die Rückstellkraft eines Federelements (22) radial zur Achse des Antriebsritzels (19) auslenkbar mit einem die Zahnstange (20) vorzugsweise rahmenförmig umgrenzenden Halteteil (21) verbunden ist.

11. Fahrzeuginnenraum-Überwachungseinrichtung (1) nach einem der Ansprüche 1 bis 10, **dadurch gekennzeichnet, daß** an dem Trägerteil (5) zusätzlich zu dem Sende-/Empfangsmodul (2) wenigstens eine Innenleuchte (9, 10) und/oder Leseleuchte (11) angeordnet ist, und daß die Lichtscheibe(n) dieser Innenleuchte (9, 10) und/oder Leseleuchte (11) in der Ruhelage des Sende-/Empfangsmoduls (5) vorzugsweise etwa mit der Abdeckung des Sende-/Empfangsmoduls (2) fluchtet.

12. Fahrzeuginnenraum-Überwachungseinrichtung (1) nach einem der Ansprüche 1 bis 11, **dadurch gekennzeichnet, daß** beidseits des Sende-/Empfangsmoduls (2) Innenleuchten (9, 10) und/oder Leseleuchten (11) angeordnet sind und daß die durch das Sende-/Empfangsmodul (2) und diese Leuchten (9, 10, 11) gebildete Anordnung vorzugsweise etwa spiegelsymmetrisch bezüglich einer rechtwinklig zur Erstreckungsebene des Trägerteils (5) angeordneten Längsmittelebene (IV) ausgebildet ist.

## Claims

1. Vehicle interior monitoring device (1) on an infrared and/or ultrasound basis with a transmitting/receiving module (2) which has at least one transmitting element (3a, 3b) and at least one receiving element (4), which is connected to an evaluation device for evaluating the signals reflected from the vehicle interior, **characterised by** the fact that the transmitting/receiving module (2) is adjustably connected to a carrier (5) and can be brought out of a rest position, in which it is essentially inside the external contour of the carrier (5), into an operating position, in which it projects above the external contour of the carrier (5) with the transmitting element (3a, 3b) and the receiving element (4) in the direction of monitoring.

2. Vehicle interior monitoring device (1) according to claim 1, **characterised by** the fact that the transmitting/receiving module has a cover (8), behind which there are all the transmitting elements (3a, 3b) and all the receiving elements (4), and that the outside of the cover (8) which is turned towards the vehicle interior with its edge in the rest position is aligned essentially with the outside of a part of the carrier adjacent to the cover (8) near this edge.

3. Vehicle interior monitoring device (1) according to claim 1 or 2, **characterised by** the fact that at least one switching element, which can be operated by the adjustable movement of the transmitting/receiving module (2), is provided for switching the transmitting/receiving module on and off and that the transmitting/receiving module (2) is switched off in the rest position and is switched on in the operating position.

4. Vehicle interior monitoring device (1) according to claim 1 to 3, **characterised by** the fact that the transmitting/receiving module (2) can be moved from the rest position to the operating position by means of an electrical actuating drive (16).

5. Vehicle interior monitoring device (1) according to one of claims 1 to 4, **characterised by** the fact that the transmitting/receiving module (2) is moveably connected by means of a sliding guide at right angles to the extension of the carrier (5).

6. Vehicle interior monitoring device (1) according to one of claims 1 to 5, **characterised by** the fact that the transmitting/receiving module (2) is connected to the carrier (5) so that it can swivel and that the swivel axis (17) is preferably near an edge of the transmitting/sending module (2).

7. Vehicle interior monitoring device (1) according to one of claims 1 to 6, **characterised by** the fact that at least one transmitting element (3a, 3b) and/or receiving element (4) is on an end (18) of the transmitting/receiving module (2) arranged at right angles to the extension of the carrier (5), preferably on the end (18) away from the swivel axis (17) and that this end (18) is inside the external contour of the vehicle interior monitoring device (1) in the rest position of the transmitting/receiving module (2).

8. Vehicle interior monitoring device (1) according to one of claims 1 to 7, **characterised by** the fact that the carrier (5) has fixing points (7) for connecting to the roof (6) of the vehicle, particularly the front of the roof, that the swivel axis (17) of the transmitting/receiving module (2) is adjacent to an edge of the carrier (5) turned towards the windscreen of the vehicle when the vehicle interior monitoring device (1) is in the installation position, and that at least one transmitting element (3a, 3b) and/or receiving element (4) is provided on the rear end of the transmitting/receiving module (2) away from the swivel axis (17), so that it is turned towards the rear interior of the vehicle in the operating position of the transmitting/receiving module (2).

9. Vehicle interior monitoring device (1) according to one of claims 1 to 8, **characterised by** the fact that a toothed rack (20), preferably on the transmitting/receiving module (2), is provided for adjusting the transmitting/receiving module (2), which engages with a drive pinion (19) of the actuating drive (16) which is preferably on the carrier (5).

10. Vehicle interior monitoring device (1) according to one of claims 1 to 9, **characterised by** the fact that the toothed rack (20) is connected to a holder (21) surrounding the toothed rack (20), preferably in the shape of a frame, which can be deflected radially to the axis of the drive pinion (19) against the restoring force of a spring element (22).

11. Vehicle interior monitoring device (1) according to one of claims 1 to 10, **characterised by** the fact that there is at least one internal light (9, 10) and/or reading light (11) on the carrier (5) in addition to the transmitting/receiving module (2), and that the glass of these internal lights (9, 10) and/or reading lights (11) preferably aligns more or less with the cover of the transmitting/receiving module (2) in the rest position of the transmitting/receiving module (5).

12. Vehicle interior monitoring device (1) according to one of claims 1 to 11, **characterised by** the fact that there are internal lights (9, 10) and/or reading lights (11) on both sides of the transmitting/receiving module (2) and that the arrangement made by the transmitting/receiving module (2) and these lights (9, 10, 11) is preferably symmetrical with reference to a longitudinal mid-plane (IV) at right angles to the extension of the carrier (5).

## Revendications

1. Dispositif de surveillance de l'intérieur d'un véhicule (1) sur la base d'infrarouges et/ou d'ultrasons, comportant un module émetteur/récepteur présentant au moins un élément émetteur (3a, 3b) et au moins un élément récepteur (4), lequel module est relié à un système d'évaluation pour évaluer les signaux réfléchis par l'intérieur du véhicule, **caractérisé en ce que** le module émetteur/récepteur (2) est relié de manière réglable avec une partie support (5) et peut être amené depuis une position de repos dans laquelle il est agencé sensiblement à l'intérieur du contour extérieur de la partie support (5) jusque dans une position de fonctionnement dans laquelle il dépasse le contour extérieur de la partie support (5) avec l'élément émetteur (3a, 3b) et l'élément récepteur (4) tournés dans la direction de surveillance.

2. Dispositif de surveillance de l'intérieur d'un véhicule (1) selon la revendication 1, **caractérisé en ce que** le module émetteur/récepteur présente un couvercle (8) derrière lequel sont agencés tous les éléments émetteurs (3a, 3b) et tous les éléments récepteurs (4), et **en ce que** la face extérieure du couvercle (8), tournée vers l'intérieur du véhicule, est en alignement par sa région de bord dans la position de repos sensiblement avec la face extérieure d'une région de partie support voisine à cette région de bord et adjacente au couvercle (8).

3. Dispositif de surveillance de l'intérieur d'un véhicule (1) selon l'une ou l'autre des revendications 1 et 2, **caractérisé en ce qu'**il est prévu au moins un élément de commutation pour allumer et éteindre le module émetteur/récepteur (2), qui est actionnable par le mouvement de réglage du module émetteur/récepteur (2), et **en ce que** le module émetteur/récepteur (2) est éteint en position de repos et allumé en position de fonctionnement.

4. Dispositif de surveillance de l'intérieur d'un véhicule (1) selon l'une des revendications 1 à 3, **caractérisé en ce que** le module émetteur/récepteur (2) est réglable au moyen d'un mécanisme de commande électrique depuis la position de repos jusque dans la position de fonctionnement.

5. Dispositif de surveillance de l'intérieur d'un véhicule (1) selon l'une des revendications 1 à 4, **caractérisé en ce que** le module émetteur/récepteur (2) est relié au moyen d'un guide coulissant à la partie support (5) de manière à pouvoir être déplacé transversalement au plan d'extension de celle-ci.

6. Dispositif de surveillance de l'intérieur d'un véhicule (1) selon l'une des revendications 1 à 5, **caractérisé en ce que** le module émetteur/récepteur (2) est relié à pivotement à la partie support (5), et **en ce que** l'axe de pivotement (17) est agencé de préférence au voisinage d'une région de bord du module émetteur/récepteur (2).

7. Dispositif de surveillance de l'intérieur d'un véhicule (1) selon l'une des revendications 1 à 6, **caractérisé en ce qu'**au moins un élément émetteur (3a, 3b) et/ou un élément récepteur (4) est agencé sur une face frontale (18) du module émetteur/récepteur (2), laquelle s'étend transversalement au plan d'extension de la partie support (5), de préférence sur la face frontale (18) agencée à distance de l'axe de pivotement (17), et **en ce que** cette face frontale (18) est agencée, dans la position de repos du module émetteur/récepteur 82), à l'intérieur du contour extérieur du dispositif de surveillance de l'intérieur du véhicule (1).

8. Dispositif de surveillance de l'intérieur d'un véhicule (1) selon l'une des revendications 1 à 7, **caractérisé en ce que** la partie support (5) présente des points de fixation (7) pour la relier au plafond (6) du véhicule, en particulier avec la région antérieure du plafond, **en ce que** l'axe de pivotement (17) du module émetteur/récepteur (2) est agencé au voisinage d'une région de bord de la partie support (5), qui est tournée vers le pare-brise avant du véhicule en position de montage du dispositif de surveillance de l'intérieur du véhicule, et **en ce qu'**au moins un élément émetteur (3a, 3b) et/ou un élément récepteur (4) est prévu sur la face frontale postérieure du module émetteur/récepteur (2), qui est agencée en éloignement de l'axe de pivotement (17), de telle sorte qu'en position de fonctionnement du module émetteur/récepteur (2), ledit élément est tourné vers la région postérieure de l'intérieur du véhicule.

9. Dispositif de surveillance de l'intérieur d'un véhicule (1) selon l'une des revendications 1 à 8, **caractérisé en ce que** pour régler le module émetteur/récepteur (2), il est prévu une crémaillère (20) agencée de préférence sur le module émetteur/récepteur (2), laquelle est en engrènement avec un pignon menant (19) du mécanisme de commande (16) agencé de préférence sur la partie support (5).

10. Dispositif de surveillance de l'intérieur d'un véhicule (1) selon l'une des revendications 1 à 9, **caractérisé en ce que** la crémaillère (20) peut être reliée à une partie de retenue (21) entourant de préférence à la manière d'un cadre la crémaillère (20), en étant susceptible d'être déviée radialement par rapport à l'axe du pignon d'entraînement (19) à l'encontre de la force de rappel d'un élément ressort (22).

11. Dispositif de surveillance de l'intérieur d'un véhicule (1) selon l'une des revendications 1 à 10, **caractérisé en ce que** sur la partie support (5), additionnellement au module émetteur/récepteur (2), est agencée au moins une lampe intérieure (9, 10) et/ou une lampe de lecture (11), et **en ce que** la/les plaque(s) d'éclairement de cette lampe intérieure (9, 10) et/ou de cette lampe de lecture (11) est/sont, dans la position de repos du module émetteur/récepteur (2), de préférence approximativement en affleurement avec le couvercle du module émetteur/récepteur (2).

12. Dispositif de surveillance de l'intérieur d'un véhicule (1) selon l'une des revendications 1 à 11, **caractérisé en ce que** des deux côtés du module émetteur/récepteur (2) sont agencées des lampes intérieures (9, 10) et/ou des lampes de lecture (11), et **en ce que** l'agencement formé par le module émetteur/récepteur (2) et par ces lampes (9, 10, 11) est réalisé de préférence approximativement symétrique par rapport à un plan médian longitudinal (IV) agencé perpendiculairement au plan d'extension de la partie support (5).
